# EUROPÄISCHE PATENTSCHRIFT

(11) **EP 2 457 681 B1**
(45) Veröffentlichungstag und Bekanntmachung des Hinweises auf die Patenterteilung: **27.04.2016**
(21) Anmeldenummer: 11188589.3
(22) Anmeldetag: 10.11.2011
(51) Int. Cl.: B23K 9/167, B23K 9/29, B23K 35/02

(54) **Brenner für das Wolfram-Inertgas-Schweißen sowie Elektrode zur Verwendung bei einem solchen Brenner**
Torch for tungsten inert gas welding and electrode to be used in such torch
Torche pour le soudage au gaz inerte et électrode tungstène et électrode destinée à être utilisée dans une telle torche

(30) Priorität: 30.11.2010 DE 102010053721
(43) Veröffentlichungstag der Anmeldung: 30.05.2012
(73) Patentinhaber: Kjellberg-Stiftung, 03238 Finsterwalde (DE)
(72) Erfinder: Schnick, Michael, 09353 Oberlungwitz (DE)
(74) Vertreter: Pfenning, Meinig & Partner mbB

(56) Entgegenhaltungen:
- JP-A- 3 142 097
- JP-A- 5 069 165
- JP-A- 56 077 072
- JP-A- 2008 147 011
- JP-U- 62 151 074
- US-A- 4 803 339

## Beschreibung

Die Erfindung betrifft eine Elektrode für das Wolfram-Inertgas-Schweißen gemäß dem Oberbegriff des Anspruchs 1 (siehe, z.B., US 4 803 339 A), sowie die Verwendung dieser Elektrode in einem Brenner (siehe Anspruch 14). Brenner für das Wolfram-Inertgas-Schweißen unterscheiden sich von anderen dadurch, dass der Zusatzwerkstoff und der Brenner unabhängig voneinander sind und keine elektrisch leitende Verbindung zwischen ihnen zwingend erforderlich ist.

Bei den weit verbreiteten Wolfram-Inertgas-Schweißbrennern brennt ein Lichtbogen zwischen einer sich nicht verbrauchenden Wolframelektrode und einem Werkstück. Die Elektrode ist üblicherweise überwiegend als Kathode geschaltet. Da die Emission von Elektronen als freie Ladungsträger im Wesentlichen durch hohe Temperaturen erreicht wird, ist es gewünscht an der Elektrode lokal gezielt hohe Temperaturen zu erreichen. Durch eine konische kegelförmige Gestalt kann dies erreicht werden. Außerdem ist es gewünscht, dass der Lichtbogenansatzpunkt bzw. -ausgangsbereich stabil und der Lichtbogen gleichmäßig ausgebildet bleibt, was durch die konische Gestalt der Elektrodenspitze unterstützt werden kann.

Für die an der Elektrode auftretenden hohen Temperaturen ist eine Kühlung vorgesehen, um den Verschleiß der Elektrode zu verhindern bzw. zumindest zu begrenzen.

Üblicherweise wird auch inertes Gas durch den Brenner in Richtung auf das Werkstück geführt. Hierfür ist eine Inertgasdüse vorhanden, die als Ringdüse ausgebildet sein kann. Dadurch kann das Inertgas als geschlossener Schleier um den Lichtbogen ausgebildet werden. Die Inertgasdüse umgibt dabei die Elektrode, die in deren Mitte angeordnet ist.

So sind aus JP 2003170273 A und JP 03142097 A solche Elektroden bekannt, die innen hohl sind, so dass ein Gas zusätzlich durch die hohle Elektrode in Richtung eines Werkstücks strömen kann. Damit soll eine zusätzliche Kühlung des Lichtbogens oder ein effizienteres Schweißen von Aluminium oder Magnesium erreicht werden.

Wie bereits angesprochen, sollen für die Emission von Elektronen an der Elektrode hohe Temperaturen erreicht werden, um den Lichtbogen sicher zünden zu können und beim Schweißen den Lichtbogen aufrecht zu erhalten. Dabei sollen konstante Verhältnisse beim Schweißen eingehalten werden und der Ansatz des Lichtbogens in einem lokal begrenzten definierten Bereich an der Elektrode erfolgen. Die dadurch auftretenden hohen Temperaturen beeinflussen aber die Lebensdauer der kostenintensiven Wolframelektroden, erfordern deren häufigen Austausch und führen demzufolge zu entsprechenden Ausfallzeiten.

Aus der JP 2008 147011 A ist eine Brenneranordnung bekannt, bei der ein Gasstrom durch eine hohle Elektrode geführt werden soll. Der Hohlraum durch der Gasstrom geführt wird, ist so ausgebildet, dass er unterschiedliche Querschnitte aufweist, um Druckänderungen zu vermeiden.

JP 3 142097 A betrifft eine Elektrode für das Wolfram-Inertgas-Schweißen, bei der ein Schutzgas um die Elektrode zur Kühlung zugeführt wird.

JP 62 151074 U betrifft außen konturierte Elektroden.

In JP 5 069165 A ist ein Verfahren zum Wolfram-Inertgas-Schweißen in Kombination mit einem Laserstrahl beschrieben.

In JP 56 077072 A ist eine Vorrichtung zum Wolfram-Inertgas-Schweißen bekannt, bei der durch eine innen hohle Elektrode ein Schweißdraht zugeführt werden kann.

US 4,803,339 A betrifft eine Elektrodenausbildung bei der in eine innen hohle Elektrode ein Kolben bis zu einem Ansatz einführbar sein soll, mit dem eine Zündung möglich ist.

Es ist daher Aufgabe der Erfindung Elektroden für das Wolfram-Inertgas-Schweißen zur Verfügung zu stellen, die verbesserte Eigenschaften beim Betrieb und eine verlängerte Lebensdauer erreichen und ein stabiler gleichmäßiger und rotationssymmetrischer Lichtbogen während der Schweißbearbeitung ausgebildet werden kann.

Erfindungsgemäß wird diese Aufgabe mit einer Elektrode, die die Merkmale des Anspruchs 1 aufweist, gelöst. Anspruch 14 betrifft die Verwendung einer Elektrode mit einem solchen Brenner. Vorteilhafte Ausgestaltungen und Weiterbildungen können mit in untergeordneten Ansprüchen bezeichneten Merkmalen realisiert werden.

Am Brenner zum Wolfram-Inertgas-Schweißen ist eine sich in Richtung eines Werkstücks konisch verjüngende, als Kathode elektrisch geschaltete Elektrode vorhanden. Die bei einem solchen Brenner erfindungsgemäß verwendbare Elektrode ist in Längsachsrichtung der Elektrode innen hohl und in einem Brennerkörper fixiert gehalten. Der innerhalb der Elektrode ausgebildete Hohlraum weist in Richtung Werkstück eine Öffnung und mindestens eine weitere Öffnung auf.

Ein Hohlraum kann kanalartig ausgebildet und in einer erfindungsgemäßen Alternative in Längsachsrichtung durch die Elektrode hindurchgeführt sein. Die weitere Öffnung ist dann an der entgegengesetzten Stirnseite der Elektrode, die vom Werkstück weg weisend angeordnet ist, angeordnet.

An der Elektrode ist in einer Alternative in einem Abstand G zur in Richtung Werkstück weisenden Spitze an der äußeren und/oder inneren Oberfläche der innen hohlen Elektrode mindestens eine Vertiefung ausgebildet, mit der der elektrisch leitende Querschnitt und die Wandstärke der Elektrode in diesem Bereich reduziert ist. Dies kann bei einer zweiten erfindungsgemäßen Alternative auch dadurch erreicht werden, dass der durch die Elektrode hindurch geführte Hohlraum Bereiche mit unterschiedlichen Innendurchmessern aufweist, wobei ein Bereich mit größerem Innendurchmesser des Hohlraums bis in den konisch verjüngten Bereich der Elektrode geführt sein kann. Der sich in Richtung eines zu bearbeitenden Werkstücks anschließende Bereich des Hohlraums hat dann einen kleineren Innendurchmesser.

Dadurch werden der elektrische Widerstand im Bereich der Vertiefung und/oder im Bereich mit reduziertem elektrisch leitenden Querschnitt und reduzierter Wandstärke und die Temperatur beim Betrieb des Brenners dort gezielt erhöht, was zu einer verbesserten, lokal gezielten Emission von Elektronen für die Ausbildung des Lichtbogens führt, die gleichmäßig über den Umfang der Elektrode erfolgen sollte. Im Bereich der Vertiefung oder dem Bereich mit reduziertem elektrisch leitenden Querschnitt ist daher die elektrische Leitfähigkeit und/oder die thermische Leitfähigkeit reduziert.

Die mindestens eine Vertiefung und/oder der Bereich mit reduziertem elektrisch leitenden Querschnitt und reduzierter Wandstärke sollte dabei in einem Abstand G zum in Richtung Werkstück weisenden Stirnrand der Spitze der Elektrode ausgebildet sein, der kleiner als das 2-Fache des Außendurchmessers der Elektrode, bevorzugt kleiner als das 5-Fache des Außendurchmessers der Elektrode ist.

Die mindestens eine Vertiefung ist dabei in unmittelbarer Nähe des sich konisch verjüngenden Bereichs der Elektrode im sich noch nicht konisch verjüngtem Bereich angeordnet. Der Konus kann sich in Richtung Werkstück an die Vertiefung oder den Bereich mit reduziertem elektrisch leitenden Querschnitt und reduzierter Wandstärke anschließen, so dass die Vertiefung eine "Grenze" zwischen konisch nicht verjüngtem und konisch verjüngten Bereich bildet.

Bei einer oder mehreren Vertiefungen, die in einem Abstand zum konisch ausgebildeten Teil der Elektrode angeordnet sind, besteht die Möglichkeit den konischen Teil bei aufgetretenem Verschleiß nach zu schleifen und die Elektrode dadurch länger nutzen zu können.

Der elektrisch leitende Querschnitt der Elektrode, sollte im Bereich der Vertiefung und/oder im Bereich mit reduziertem elektrisch leitenden Querschnitt und reduzierter Wandstärke um mindestens 30 %, bevorzugt mindestens 50 % reduziert sein.

Eine Vertiefung kann als rechteckige, trapezförmige, halbrunde oder keilförmige Nut ausgebildet sein.

Eine oder auch mehrere Vertiefung(en) können als nutenförmige Einschnitte und auch radial umlaufend um die mittlere Längsachse der Elektrode ausgebildet sein. Eine solche Vertiefung bildet dann einen Ring um die mittlere Längsachse an der Elektrode. Mehrere Vertiefungen können in Winkelabständen zueinander, die bevorzugt gleich sind, auf einem gemeinsamen Durchmesser in einer Ebenen ausgebildet und durch Stege voneinander getrennt sein. Solche Vertiefungen können beispielsweise durch Ausfräsen von Nuten hergestellt werden, wobei die Werkstofftiefe bei einer ansonsten rotationssymmetrischen Elektrode dieser einzelnen Vertiefung(en) nicht gleich groß sein muss.

So kann ein Vieleckprofil im Bereich der Vertiefungen erhalten werden.

Im Bereich einer oder mehrerer Vertiefung(en) oder dem Bereich mit reduziertem elektrisch leitenden Querschnitt, reduzierter elektrischer Leitfähigkeit und/oder thermischer Leitfähigkeit und reduzierter Wandstärke kann/können auch mindestens eine Durchbrechung vorhanden sein, die eine weitere Öffnung zwischen Hohlraum und Umgebung bilden kann/können. Durch eine oder mehrere solche Öffnung(en) kann eine Gasströmung geführt werden, so dass beispielsweise eine Gasströmung ausgehend vom Inneren des Lichtbogens durch den Hohlraum der Elektrode nach außen in die Umgebung erreicht werden kann. In diesem Fall kann ggf. auf eine Öffnung am Stirnende der Elektrode, die vom Werkstück wegweisend angeordnet ist, verzichtet werden.

Es besteht auch eine weitere Möglichkeit mehrere solcher Vertiefungen an einer Elektrode auszubilden, diese können in Abständen zueinander radial umlaufend an der Elektrode ausgebildet sein.

Der innere Hohlraum kann auch entlang der mittleren Längsachse der Elektrode unterschiedliche Innendurchmesser oder freie Querschnittsflächen aufweisen. So kann beispielsweise der Innendurchmesser oder der freie Querschnitt zumindest in einem sich konisch verjüngenden Bereich an der zu einem Werkstück weisenden Spitze der Elektrode kleiner als in sich daran anschließenden Bereichen der Elektrode sein. Mit einem so ausgebildeten Hohlraum können die Strömungsverhältnisse und insbesondere die Strömungsgeschwindigkeit eines durch den Hohlraum geführten Gases beeinflusst werden.

Die innere Mantelfläche der Elektrode kann auch mit einer dielektrischen Beschichtung versehen oder eine innen hohle dielektrische Hülse in den Hohlraum der Elektrode eingeführt sein. Hierfür kann ein keramisches den herrschenden Temperaturen angepasstes keramisches Material eingesetzt sein. Dies erschließt die Möglichkeit der Zufuhr eines Zusatzwerkstoffs zum Schweißen durch den Hohlraum der Elektrode hindurch.

Dabei kann es sich um einen Draht, Stab oder auch ein Pulver handeln. Dabei kann neben dem Zusatzwerkstoff auch ein Gas durch den Hohlraum strömen.

Insbesondere wenn Zusatzwerkstoff durch die Elektrode zugeführt werden soll, ist es günstig an der inneren Wand der Elektrode mindestens einen von einer Stirnseite der Elektrode zu der gegenüberliegenden Stirnseite der Elektrode geführten Kanal vorzusehen. Durch diesen kann zusätzlich ein Gas strömen. Ein oder mehrere Kanäle können parallel zur mittleren Längsachse der Elektrode ausgerichtet sein. Ein oder mehrere Kanäle können aber auch spiralförmig ausgebildet sein. Dadurch kann die Gasströmung durch den Hohlraum der Elektrode in Richtung Werkstück günstig beeinflusst werden. Eine so ausgebildete Gasströmung zirkuliert um ihre Längsachse.

Mit dem Gas, das durch den kanalförmigen Hohlraum der Elektrode geführt ist, kann auch eine zusätzliche Kühlung der Elektrode erreicht werden. Dafür kann eine Gaszuführung angeschlossen sein, so dass ein Gas durch den durch die Elektrode geführten Hohlraum in Richtung Werkstück durch den ausgebildeten Lichtbogen strömt.

Bei einem Brenner kann durch die innen hohle Elektrode auch ein anderes Gas strömen, das sich von einem anderen weiter außen zugeführten Gas, das ein Schutzgas sein kann, unterscheidet.

Der durch die Elektrode geführte Hohlraum kann aber auch an der entgegengesetzt zum Werkstück weisenden Seite offen oder dort eine Absaugung angeschlossen sein. Dadurch ist es möglich, eine Gasströmung in entgegengesetzter Richtung also vom Werkstück weg durch den Lichtbogen und die Elektrode auszubilden. Es hat sich heraus gestellt, dass sich dadurch im unmittelbaren Bearbeitungsbereich für das Schweißen sehr günstige Temperatur- und Druckverhältnisse einstellen lassen. Bereits bei einer lediglich offenen Seite kann sich eine vorteilhaft wirkende Gasströmung durch den Hohlraum der Elektrode in die Umgebung ausbilden, ohne dass zusätzliche Maßnahmen erforderlich sind bzw. ein zusätzlicher Aufwand betrieben werden muss. Es ist lediglich ein ausreichend großer freier Querschnitt des Hohlraums erforderlich. Eine Elektrode, die so genutzt wird, kann auch ohne die mindestens eine Vertiefung ausgebildet sein. Auch bei durch den Hohlraum zurück strömender Gasströmung kann eine Kühlung des Brenners und ggf. eines durch den Hohlraum zugeführten Zusatzwerkstoffs erreicht werden.

In einer Weiterbildung der Erfindung besteht die Möglichkeit durch den Hohlraum einen Laserstrahl auf die Werkstückoberfläche zu richten. Damit erschließt sich die Möglichkeit den Fußpunkt des Lichtbogens in seiner Position zu beeinflussen bzw. ihn zu führen.

Auch bei einer solchen Ausführungsform besteht die Möglichkeit eine Gasströmung durch die Elektrode auf die Werkstückoberfläche zu richten oder eine Gasströmung mit entgegengesetzter Strömungsrichtung durch bzw. in den Hohlraum der Elektrode zu führen.

Nachfolgend soll die Erfindung beispielhaft näher erläutert werden.

Dabei zeigen:
Figur 1 eine Schnittdarstellung durch ein Beispiel eines Brenners;
Figur 2 eine Schnittdarstellung durch eine bei der Erfindung einsetzbaren Elektrode;
Figuren 3a) und 3c) zwei Ausführungen für eine erfindungsgemäße Elektrode sowie ein die Wärmeleitfähigkeit an einer erfindungsgemäßen Elektrode verdeutlichendes Diagramm und
Figur 4 Einflüsse auf die Ausbildung des Lichtbogens an Elektroden.

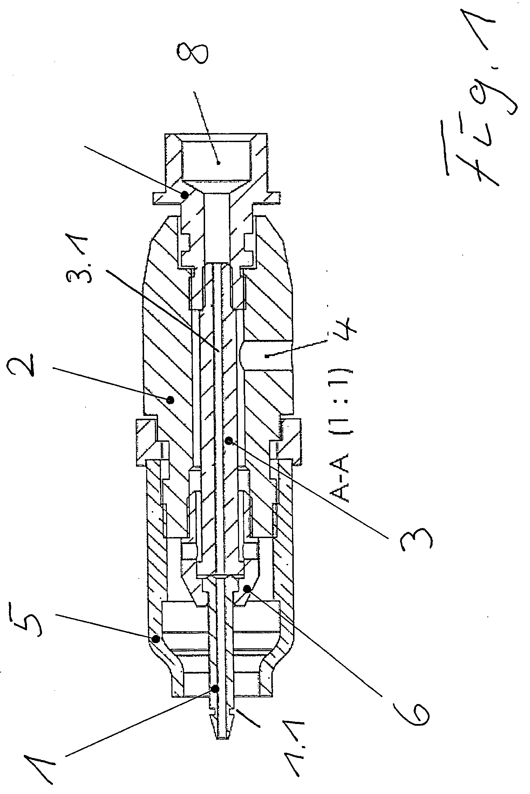

Bei dem in Figur 1 gezeigten Beispiel eines Brenners für das Wolfram-Inertgas-Schweißen ist in einem Brennerkörper 2 an einem Spannelement 3 eine als Kathode geschaltete Elektrode 1 aus Wolfram fixiert gehalten. Auf die Darstellung des elektrischen Anschlusses ist verzichtet worden. Am Brennerkörper 2 ist eine Zuführung für ein inertes Schutzgas 4 vorhanden, durch die Schutzgas durch den Brennerkörper 2, einen Gasverteiler 6 und eine um die Elektrode 1 ausgebildete Schutzgasdüse 5 in Richtung eines nicht dargestellten Werkstücks um den ausgebildeten Lichtbogen herum strömen kann.

An der der Elektrode 1 gegenüberliegenden Seite des Brennerkörpers 2 ist eine weitere Gaszuführung 8 vorhanden. Über diese kann ebenfalls ein Schutzgas zugeführt werden. Dieses strömt durch einen Kanal 3.1 im Spannelement 3 und den kanalförmigen Hohlraum 1.2 der Elektrode 1 in Richtung Werkstück durch den zwischen Elektrode 1 und Werkstück ausgebildeten Lichtbogen.

An Stelle der Gaszuführung 8 kann auch eine Leitung angeschlossen sein, durch die Gas ausgehend von der Elektrode 1 durch diese und den Kanal 3.1 des Spannelements 3 in die Umgebung strömen kann. Daran kann ein Verdichter mit seiner Saugseite oder eine Venturidüse angeschlossen sein, um den Volumenstrom der so geführt wird, zu erhöhen. Der Hohlraum 1.2 kann aber auch lediglich an beiden Stirnseiten offen sein und dann ggf. an der dem Werkstück abgewandten Stirnseite eine Venturidüse vorhanden sein.

Das durch die Elektrode 1 abgesaugte Gas strömt vom Bearbeitungsbereich des Werkstücks durch den Lichtbogen. Dadurch können die Temperatur an der Elektrode und die elektrische Stromdichte im Lichtbogen erhöht werden, wodurch das Schmelzbad günstig beeinflusst wird und ein tieferer Einbrand der Schweißnaht erreichbar ist. Außerdem kann die Bearbeitungsgeschwindigkeit erhöht werden.

Auf die Darstellung einer Kühlung im Brennerkörper 2 ist ebenfalls verzichtet worden.

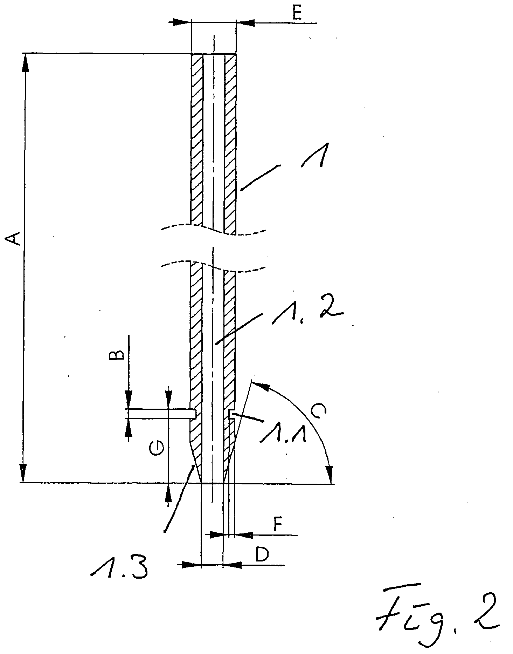

In der Darstellung von Figur 1 wird außerdem deutlich, dass an der Elektrode 1 an der äußeren Mantelfläche eine radial umlaufende ringförmige Vertiefung 1.1 ausgebildet ist. Dies soll an Hand der Figur 2 weiter erläutert werden.

Diese zeigt eine Schnittdarstellung einer Elektrode 1 mit einem durchgehenden kanalförmigen Hohlraum 1.2. Dieser hat einen Durchmesser D von 1,5 mm.

An der äußeren Oberfläche der Elektrode 1 ist eine nutenförmige Vertiefung 1.1 ausgebildet, die eine Breite B von 1 mm aufweist. Die Elektrode 1 hat einen Außendurchmesser E von 3,2 mm, so dass sich eine Wandstärke im nicht konisch verjüngten Bereich von 0,85 mm ergibt. Diese ist im Bereich der Vertiefung 1.1 auf 0,35 mm reduziert. Die Vertiefung 1.1 ist bei diesem Beispiel in einem Abstand G vom vorderen Stirnrand der Elektrode 1 mit 3,7 mm im noch nicht konisch verjüngten Bereich angeordnet. Der Konus wurde bei diesem Beispiel mit einem Winkel C von 75 ° ausgebildet.

Die hier rechteckige Vertiefung hatte eine Tiefe F von 0,5 mm. Dadurch konnte eine Temperaturverteilung an der Spitze im konisch verjüngten Bereich erreicht werden, die eine rotationssymmetrische Emission von Elektronen in einem kurzen Abstand vom vorderen Stirnrand der Elektrode 1 an deren Spitze ermöglichte.

Ein mit einer solchen Elektrode 1 ausgebildete Brenner konnte ohne Weiteres mit elektrischen Strömen oberhalb 200 A und weit darüber hinaus betrieben werden, ohne dass ein bemerkenswerter Elektrodenverschleiss auftrat, der einen häufigen Austausch erforderlich macht.

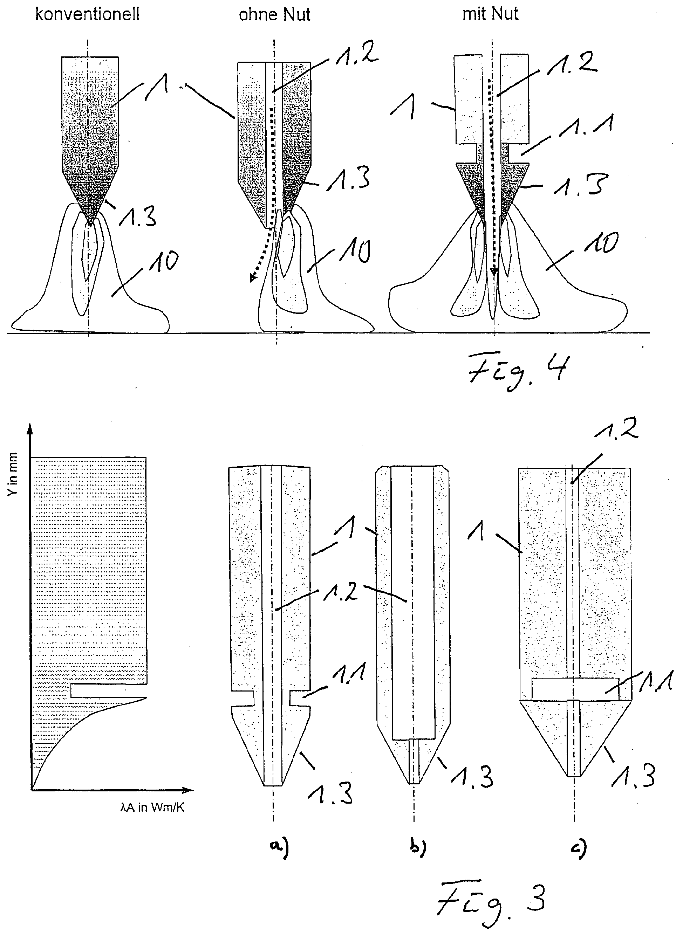

In Figuren 3a) und 3c) sind zwei Ausführungsbeispiele einer bei der Erfindung einsetzbaren Elektrode 1 gezeigt, bei dem in der Figur 3a) eine Vertiefung 1.1 ausgebildet ist und bei der Figur 3c) in der Figur 3c) dargestellten Elektrode 1 ein durch die Elektrode 1 hindurch geführter Hohlraum 1.2 Bereiche mit unterschiedlichen Innendurchmessern aufweist, bei der es sich um eine rotationssymmetrische Ausbildung handelt. In der mittleren Darstellung ist ein nicht von der Erfindung bedecktes Beispiel bei dem der Bereich mit größerem Innendurchmesser bis in den konisch verjüngten Bereich der Elektrode 1 geführt und von da an bis hin zur Öffnung, die an der in Richtung Werkstück weisenden Stirnseite angeordnet ist, ist der Innendurchmesser kleiner, was zu höheren Strömungsgeschwindigkeiten eines durch den Hohlraum 1.2 geführten Gases in diesem Bereich führt. Die Herstellung kann durch Bohren oder Erodieren erfolgen.

Bei der in der Figur 3c) gezeigten Ausführung gemäß der Erfindung ist der Hohlraum 1.2 mit zwei Bereichen, deren Innendurchmesser unterschiedlich sind, ausgebildet. In diesem Fall bildet der Bereich des Hohlraums 1.2 mit dem größeren Innendurchmesser eine Vertiefung 1.1, mit der der elektrisch leitende Querschnitt der Elektrode 1 in diesem Bereich an der inneren Oberfläche der Elektrode 1 reduziert ist.

Diese Elektrode 1 kann aus zwei Teilen hergestellt werden, die beispielsweise durch Schweißen miteinander verbunden sind. Ein Teil ist dabei die sich konisch verjüngende Spitze der Elektrode 1 und das andere Teil ist eine Hülse mit einer Bohrung, die in Richtung Werkstück einen breiteren Bereich aufweist. Der verbeiterte Bereich der Bohrung könnte in nicht dargestellter Form auch am die Spitze bildenden Teil ausgebildet sein.

Mit dem in Figur 3 auch gezeigten Diagramm soll die thermische Leitfähigkeit der Elektrode 1 in ihrer Längsachsrichtung verdeutlicht werden. Es wird deutlich, wie sie im Bereich einer Vertiefung oder in einem Bereich mit reduzierter elektrischer Leitfähigkeit und reduzierte Wandstärke sowie im sich konisch verjüngenden Bereich an der Spitze der Elektrode 1 entsprechend verringert ist. Die elektrische Leitfähigkeit kann sich analog zur im Diagramm gezeigten thermischen Leitfähigkeit in Längsachsrichtung der Elektrode 1 verändern.

Mit Figur 4 soll der vorteilhafte Einfluss der Erfindung auf den Ansatz des Lichtbogens an der Elektrode 1 verdeutlicht werden.

In der linken Darstellung ist eine Elektrode 1 ohne Hohlraum mit Öffnung gezeigt. Der Lichtbogen 10 bildet sich zwar gleichmäßig aus, es können aber mit dieser herkömmlichen Elektrodenform nicht die bei der Erfindung möglichen Vorteile ausgenutzt werden.

In der mittleren Darstellung ist die Ausbildung des Lichtbogens 10 an einer innen hohlen Elektrode 1, nach dem Stand der Technik, ohne Wärmestaueffekt, gezeigt. In diesem Fall kann es zu einem instabilen Ansatz des Lichtbogens 10 kommen, was zu instabilen Verhältnissen bei der Bearbeitung und zu erhöhtem Elektrodenverschleiss führt. Außerdem kann eine Aufweitung des Lichtbogens 10 durch Zuführung eines Sekundärgases durch das Zentrum des Lichtbogens 10 oder eine Fokussierung des Lichtbogens 10 in Folge einer Absaugung von Plasma aus dem Lichtbogenkern nicht erreicht werden. Da sich der Lichtbogen 10 lediglich an einer Seite der Elektrode 1 ausbildet, können die genannten Nachteile verschärft auftreten.

Mit der gestrichelten Linie, an deren Spitze ein Pfeil vorhanden ist, soll verdeutlicht werden, dass auch eine Gasströmung die durch den Hohlraum 1.2 der Elektrode 1 zum Werkstück strömt, in ihrer Strömungsrichtung nachteilig beeinflusst wird und in einen unerwünschten Bereich strömt. Die erfindungsgemäß gewünschten Vorteile können so nicht erreicht werden.

In der rechten Darstellung wird deutlich, dass sowohl die Lichtbogenausbildung an der Elektrode 1 nach der Erfindung, wie auch die Gasströmung ebenfalls mit gestrichelter Linie dargestellt), die durch den Hohlraum 1.2 und den Lichtbogen 10 zum Werkstück strömt gleichmäßig und homogen gehalten werden können.

Ein durch den Hohlraum 1.2 auf das Werkstück gerichteter Laserstrahl würde sich analog zu einem durch den Hohlraum 1.2 geführten Gasstrom verhalten.

Durch die so erreichbare zentrale Gasströmung durch den rotationssymmetrischen Lichtbogen kann ein gleichmäßiger Lichtbogenansatz erreicht werden. Durch die erfindungsgemäße Ausbildung kann dabei vorteilhaft eine Verbreiterung des Lichtbogens 10 und des Energieeintrags in ein Werkstück, eine homogene Zusammensetzung des Plasmas im Lichtbogen 10, eine Verbesserung der Lichtbogeneigenschaften durch Zuführung eines sekundären inneren Gases, mit einer vom primären Schutzgas abweichenden Gaszusammensetzung oder eines anderen Sekundärgases sowie eine Erhöhung der Energiedichte im Lichtbogen 10 erreicht werden.

## Patentansprüche

1. Elektrode zum Wolfram-Inertgas-Schweißen mit einer sich in Richtung eines Werkstücks konisch verjüngenden als Kathode elektrisch geschalteten Elektrode, die innen hohl und in einem Brennerkörper (2) fixierbar ist und ein so innerhalb der Elektrode (1) ausgebildeter Hohlraum (1.2) in Richtung Werkstück eine Öffnung und mindestens eine weitere Öffnung aufweist, wobei
in einem Abstand G zur in Richtung Werkstück weisenden Spitze an der äußeren und/oder inneren Oberfläche der innen hohlen Elektrode (1) mindestens eine Vertiefung (1.1) ausgebildet ist und/oder der durch die Elektrode (1) hindurch geführte Hohlraum (1.2) Bereiche mit unterschiedlichen Innendurchmessern aufweist,
**dadurch gekennzeichnet, dass**
mit der mindestens einen Vertiefung (1.1) ein Bereich mit reduzierter elektrischer Leitfähigkeit und/oder thermischer Leitfähigkeit und reduzierter Wandstärke der Elektrode (1) ausgebildet und in unmittelbarer Nähe des sich konisch verjüngenden Bereichs (1.3) der Elektrode (1) in einem nicht konisch verjüngten Bereich angeordnet ist oder Bereiche mit unterschiedlichen Innendurchmessern des Hohlraums (1.2) mit einem Bereich mit reduzierter elektrischer Leitfähigkeit und/oder thermischer Leitfähigkeit und reduzierter Wandstärke der Elektrode (1) im sich konisch verjüngenden Bereichs (1.3) der Elektrode (1) angeordnet ist.

2. Elektrode nach Anspruch 1, **dadurch gekennzeichnet, dass** die Vertiefung(en) (1.1) und/oder der Bereich mit reduzierter elektrischer Leitfähigkeit und/oder thermischer Leitfähigkeit und reduzierter Wandstärke der Elektrode (1) in einem Abstand G zum in Richtung Werkstück weisenden Stirnrand der Spitze der Elektrode (1) ausgebildet ist/sind, der im Bereich, der kleiner als der Außendurchmesser der Elektrode ist, liegt.

3. Elektrode nach Anspruch 1 oder 2, **dadurch gekennzeichnet, dass** der elektrisch leitende Querschnitt im Bereich der Vertiefung(en) (1.1) und/oder im Bereich mit reduzierter elektrischer Leitfähigkeit und/oder thermischer Leitfähigkeit und reduzierter Wandstärke der Elektrode (1) um mindestens 30 % reduziert ist.

4. Elektrode nach einem der vorhergehenden Ansprüche, **dadurch gekennzeichnet, dass** die Vertiefung(en) (1.1) als rechteckige, trapezförmige oder keilförmige Nut ausgebildet ist/sind.

5. Elektrode nach einem der vorhergehenden Ansprüche, **dadurch gekennzeichnet, dass** eine Vertiefung (1.1) radial umlaufend ausgebildet ist.

6. Elektrode nach einem der vorhergehenden Ansprüche, **dadurch gekennzeichnet, dass** eine oder mehrere Vertiefung(en) (1.1) an der äußeren Oberfläche als nutenförmige(r) Einschnitt(e) ausgebildet ist/sind.

7. Elektrode nach einem der vorhergehenden Ansprüche, **dadurch gekennzeichnet, dass** an mindestens einer Vertiefung (1.1) und/oder im Bereich mit reduzierter elektrischer Leitfähigkeit und/oder thermischer Leitfähigkeit und reduzierter Wandstärke der Elektrode (1) mindestens eine Durchbrechung ausgebildet ist, die eine Öffnung als Verbindung zwischen Hohlraum (1.2) und Umgebung bildet.

8. Elektrode nach einem der vorhergehenden Ansprüche, **dadurch gekennzeichnet, dass** der Hohlraum (1.2) entlang der Längsachse der Elektrode (1) unterschiedliche Innendurchmesser oder freie Querschnittsflächen aufweist.

9. Elektrode nach einem der vorhergehenden Ansprüche, **dadurch gekennzeichnet, dass** die innere Mantelfläche der Elektrode (1) mit einer dielektrischen Beschichtung versehen oder eine innen hohle dielektrische Hülse eingeführt ist.

10. Elektrode nach einem der vorhergehenden Ansprüche, **dadurch gekennzeichnet, dass** durch den inneren Hohlraum (1.2) der Elektrode (1) ein Zusatzwerkstoff zuführbar oder ein Laserstrahl durch den Hohlraum auf die Oberfläche eines Werkstücks geführt ist.

11. Elektrode nach einem der vorhergehenden Ansprüche, **dadurch gekennzeichnet, dass** an der inneren Wand der Elektrode (1) mindestens ein von einer Stirnseite der Elektrode (1) zu der gegenüberliegenden Stirnseite der Elektrode (1) geführter Kanal ausgebildet ist.

12. Elektrode nach einem der vorhergehenden Ansprüche, **dadurch gekennzeichnet, dass** an die Elektrode (1) eine Gaszuführung (8) angeschlossen ist, so dass ein Gas durch den durch die Elektrode (1) geführten Hohlraum (1.2) in Richtung Werkstück strömt.

13. Elektrode nach einem der vorhergehenden Ansprüche, **dadurch gekennzeichnet, dass** der durch die Elektrode (1) geführte Hohlraum (1.2) an der entgegengesetzt zum Werkstück weisenden Seite offen oder dort eine Absaugung angeschlossen ist.

14. Verwendung einer Elektrode nach einem der vorhergehenden Ansprüche mit einem Brenner zum Wolfram-Inertgas-Schweißen.

## Claims

1. An electrode for tungsten inert gas welding having an electrode which tapers conically in the direction of a workpiece, which is electrically connected as a cathode, which is hollow inside and which can be fixed in a torch body (2) and a hollow space (1.2) formed in this manner within the electrode (1) has an opening in the direction of the workpiece and at least one further opening, wherein
at least one recess (1.1) is formed at a spacing G from the tip facing in the direction of the workpiece at the outer and/or inner surface of the internally hollow electrode (1) and/or the hollow space (1.2) conducted through the electrode (1) has regions having different inner diameters,
**characterized in that**
a region having a reduced electrical conductivity and/or thermal conductivity and a reduced wall thickness of the electrode (1) is formed by the at least one recess (1.1) and is arranged in a non-conically tapered region in the direct vicinity of the conically tapering region (1.3) of the electrode(1) or regions having different inner diameters of the hollow space (1.2) are arranged with a region of reduced electrical conductivity and/or thermal conductivity and a reduced wall thickness of the electrode (1) in the conically tapering region (1.3) of the electrode (1).

2. An electrode in accordance with claim 1, **characterized in that** the recess(es) (1.1) and/or the region having reduced electrical conductivity and/or thermal conductivity and a reduced wall thickness of the electrode (1) is/are formed at a spacing G from the end margin of the tip of the electrode (1) facing in the direction of the workpiece which is in the region which is smaller than the outer diameter of the electrode.

3. An electrode in accordance with claim 1 or claim 2, **characterized in that** the electrically conductive cross-section is reduced by at least 30% in the region of the recess(es) (1.1) and/or in the region with reduced electrical conductivity and/or thermal conductivity and with a reduced wall thickness of the electrode (1).

4. An electrode in accordance with one of the preceding claims, **characterized in that** the recess(es) (1.1) is/are formed as a rectangular, trapezoidal or wedge-shaped groove.

5. An electrode in accordance with one of the preceding claims, **characterized in that** a recess (1.1) is formed as radially peripheral.

6. An electrode in accordance with one of the preceding claims, **characterized in that** one or more recesses (1.1) are formed at the outer surface as groove-shaped incision(s).

7. An electrode in accordance with one of the preceding claims, **characterized in that** at least one aperture which forms an opening as a connection between the hollow space (1.2) and the environment is formed at at least one recess (1.1) and/or in the region with a reduced electrical conductivity and/or thermal conductivity and with a reduced wall thickness of the electrode (2).

8. An electrode in accordance with one of the preceding claims, **characterized in that** the hollow space (1.2) has different inner diameters or free cross-sectional areas along the longitudinal axis of the electrode (1).

9. An electrode in accordance with one of the preceding claims, **characterized in that** the inner jacket surface of the electrode (1) is provided with a dielectric coating or is introduced into an internally hollow dielectric sleeve.

10. An electrode in accordance with one of the preceding claims, **characterized in that** a weld metal can be supplied through the inner hollow space (1.2) of the electrode (1) or a laser beam is introduced through the hollow space onto the surface of a workpiece.

11. An electrode in accordance with one of the preceding claims, **characterized in that** at least one channel is formed at the inner wall of the electrode (1) and is conducted from an end side of the electrode (1) to the oppositely disposed end side of the electrode (1).

12. An electrode in accordance with one of the preceding claims, **characterized in that** a gas supply (8) is connected to the electrode (1) such that a gas flows through the hollow space (1.2) conducted through the electrode (1) in the direction of the workpiece.

13. An electrode in accordance with one of the preceding claims, **characterized in that** the hollow space (1.2) conducted through the electrode (1) is open at the side facing opposite to the workpiece or an extractor is connected there.

14. Use of an electrode in accordance with one of the preceding claims having a torch for tungsten inert gas welding.

## Revendications

1. Électrode pour une soudure au gaz inerte et au tungstène, avec une électrode branchée électriquement en tant que cathode se rétrécissant de manière conique en direction d'une pièce, qui est creuse à l'intérieur et qui peut être fixée dans un corps de brûleur (2) et un espace creux (1.2) ainsi réalisé à l'intérieur de l'électrode (1) en direction de la pièce présente une ouverture et au moins une ouverture supplémentaire,
au moins une cavité (1.1) étant réalisée à une distance G par rapport à la pointe orientée en direction de la pièce, au niveau de la surface externe et/ou interne de l'électrode (1) creuse à l'intérieur et/ou l'espace creux (1.2) guidé à travers l'électrode (1) présentant des zones avec différents diamètres internes,
**caractérisée en ce que**
avec l'au moins une cavité (1.1), une zone avec une conductivité électrique et/ou une conductivité thermique réduite et une épaisseur de paroi réduite de l'électrode (1) est réalisée et disposée à proximité immédiate de la zone se rétrécissant de manière conique (1.3) de l'électrode (1) dans une zone sans rétrécissement conique ou des zones avec différents diamètres internes de l'espace creux (1.2) avec une zone présentant une conductivité électrique et/ou une conductivité thermique réduite avec une épaisseur de paroi réduite de l'électrode (1) sont disposées dans la zone se rétrécissant de manière conique (1.3) de l'électrode (1).

2. Électrode selon la revendication 1, **caractérisée en ce que** la/les cavité(s) (1.1) et/ou la zone avec une conductivité électrique et/ou une conductivité thermique réduite et une épaisseur de paroi réduite de l'électrode (1) est/sont réalisée(s) à une distance G par rapport au bord frontal de la pointe de l'électrode (1) orienté en direction de la pièce, qui se trouve dans une zone qui est plus petite que le diamètre externe de l'électrode.

3. Électrode selon la revendication 1 ou 2, **caractérisée en ce que** la section transversale électriquement conductrice est réduite au niveau de la (des) cavité(s) (1.1) et/ou dans la zone avec une conductivité électrique et/ou une conductivité thermique réduite et une épaisseur de paroi réduite de l'électrode (1), d'au moins 30 %.

4. Électrode selon l'une des revendications précédentes, **caractérisée en ce que** la/les cavité(s) (1.1) est/sont conçue(s) comme une rainure rectangulaire, trapézoïdale ou conique.

5. Électrode selon l'une des revendications précédentes, **caractérisée en ce qu'**une cavité (1.1) est conçue de manière circulaire radiale.

6. Électrode selon l'une des revendications précédentes, **caractérisée en ce qu'**une ou plusieurs cavité(s) (1.1) est/sont conçue(s), au niveau de la surface externe, comme une/des entaille(s) en forme de rainure(s).

7. Électrode selon l'une des revendications précédentes, **caractérisée en ce que**, au niveau d'au moins une cavité (1.1) et/ou dans la zone avec une conductivité électrique et/ou une conductivité thermique réduite et une épaisseur de paroi réduite de l'électrode (1), au moins une découpe est réalisée, qui forme une ouverture établissant une liaison entre l'espace creux (1.2) et l'environnement.

8. Électrode selon l'une des revendications précédentes, **caractérisée en ce que** l'espace creux (1.2) présente, le long de l'axe longitudinal de l'électrode (1), différents diamètres internes ou des faces de sections transversales libres.

9. Électrode selon l'une des revendications précédentes, **caractérisée en ce que** la surface d'enveloppe interne de l'électrode (1) est munie d'un revêtement diélectrique ou est insérée dans un manchon diélectrique creux à l'intérieur.

10. Électrode selon l'une des revendications précédentes, **caractérisée en ce qu'**un matériau supplémentaire peut être introduit à travers l'espace creux interne (1.2) de l'électrode (1) ou un faisceau laser est guidé à travers l'espace creux vers la surface d'une pièce.

11. Électrode selon l'une des revendications précédentes, **caractérisée en ce que**, au niveau de la paroi interne de l'électrode (1), est réalisé au moins un canal guidé d'une face frontale de l'électrode (1) vers la face frontale opposée de l'électrode (1).

12. Électrode selon l'une des revendications précédentes, **caractérisée en ce que**, au niveau de l'électrode (1) est raccordée une alimentation en gaz (8) de façon à ce qu'un gaz s'écoule à travers l'espace creux (1.2) guidé à travers l'électrode (1) en direction de la pièce.

13. Électrode selon l'une des revendications précédentes, **caractérisée en ce que** l'espace creux (1.2) guidé à travers l'électrode (1) est ouvert sur le côté opposé à la pièce ou un dispositif d'aspiration y est raccordé.

14. Utilisation d'une électrode selon l'une des revendications précédentes avec un brûleur pour une soudure à l'aide de tungstène et d'un gaz inerte.
